# EUROPEAN PATENT SPECIFICATION

(11) **EP 3 522 268 B1**
(45) Date of publication and mention of the grant of the patent: **13.12.2023**
(21) Application number: 19155384.1
(22) Date of filing: 04.02.2019
(51) Int. Cl.: H01M 4/131, H01M 4/1391, H01M 4/62, H01M 4/04, H01M 10/0525, H01M 4/36, H01M 4/505, H01M 4/525, H01M 10/42, C01G 53/00

(54) **POSITIVE ELECTRODE ACTIVE MATERIAL FOR LITHIUM ION BATTERY, METHOD FOR PRODUCING POSITIVE ELECTRODE ACTIVE MATERIAL FOR LITHIUM ION BATTERY, POSITIVE ELECTRODE FOR LITHIUM ION BATTERY AND LITHIUM ION BATTERY**
POSITIVELEKTRODENAKTIVMATERIAL FÜR EINE LITHIUM-IONEN-BATTERIE, VERFAHREN ZUR HERSTELLUNG EINES POSITIVELEKTRODENAKTIVMATERIALS FÜR EINE LITHIUM-IONEN-BATTERIE, POSITIVELEKTRODE FÜR EINE LITHIUM-IONEN-BATTERIE SOWIE LITHIUM-IONEN-BATTERIE
MATÉRIAU ACTIF D'ÉLECTRODE POSITIVE POUR BATTERIE AU LITHIUM-ION , PROCÉDÉ DE PRODUCTION DE MATÉRIAU ACTIF D'ÉLECTRODE POSITIVE POUR BATTERIE AU LITHIUM-ION, ÉLECTRODE POSITIVE POUR BATTERIE AU LITHIUM-ION ET BATTERIE AU LITHIUM-ION

(30) Priority: 06.02.2018 JP 2018019623
(43) Date of publication of application: 07.08.2019
(73) Proprietor: JX Metals Corporation, Tokyo 105-8417 (JP)
(72) Inventor: KASHIMURA, Toshihide, Kitaibaraki-shi, Ibaraki 319-1535 (JP)
(74) Representative: Yeadon IP Limited

(56) References cited:
- CN-A- 106 684 323
- JP-A- 2000 323 143
- JP-A- 2017 107 827
- JP-A- 2017 509 126
- US-A1- 2009 081 548
- US-A1- 2009 104 530
- US-A1- 2015 010 821
- US-A1- 2016 043 391

## Description

### TECHNICAL FIELD

The present invention relates to a positive electrode active material for a lithium ion battery, a method for producing a positive electrode active material for a lithium ion battery, a positive electrode for a lithium ion battery, and a lithium ion battery.

### BACKGROUND ART

In general, a lithium-containing transition metal oxide is used for a positive electrode active material for a lithium secondary battery. Specifically, the transition metal oxide is a layered compound lithium cobalt oxide (LiCoO₂), a layered compound lithium nickel oxide (LiNiO₂), a spinel compound lithium manganate (LiMn₂O₄), or the like. Compounding (blending, granulating or the like) of them is being advanced in order to improve characteristics (high capacity, cycle characteristics, storage characteristics, reduced internal resistance, rate characteristics) or improve safety. Lithium secondary batteries for large-scale applications such as power sources for motor vehicles and for load leveling are required to have characteristics different from conventional those for mobile phones and PCs.

Lithium ion batteries using positive electrode active materials include all-solid batteries and liquid-based batteries. Recently, it is known in the art that battery characteristics are improved by providing a coating of lithium niobate on a surface of a lithium-containing transition metal oxide to alleviate an increase in interfacial resistance, or by suppressing reaction with an electrolytic solution (Patent Document 1).

### CITATION LIST

### Patent Literature

Patent Document 1: Japanese Patent Application Publication No. 2014-238957 A

In other related prior art:
JP 2017 509126 A discloses a cathode for an electrochemical energy accumulator, in particular a lithium cell, with particles having a first active material which can be lithiated and which is based on a transitional metal oxide, characterised in that the particle or a base body comprising the particle is/are provided at least partially with a functional layer, which conducts lithium ions and comprises at least one redox active element.

US 2009/104530 A1 discloses a powder of a lithium transition-metal compound for a positive-electrode material in a lithium secondary battery, which is said to achieve a good balance of improved battery performance, cost reduction, resistance to a higher voltage, and a higher safety level. The powder is characterized in that in a mercury intrusion curve obtained by mercury intrusion porosimetry, the amount of mercury intruded is in the range of 0.8 cm³/g to 3 cm³/g when the pressure is increased from 3.86 kPa to 413 MPa.

US 2016/043391 A1 discloses a lithium-transition metal oxide powder with a coating layer containing lithium niobate formed on a part or the whole part of a surface of a lithium-transition metal oxide particle and having a low powder compact resistance, and a positive electrode active material for a lithium ion battery containing the aforesaid powder. Specifically, the powder is composed of a lithium-transition metal oxide particle with a part or the whole part of a surface coated with a coating layer containing lithium niobate, wherein a carbon-content is 0.03 mass % or less.

CN 106 684 323 A discloses a ternary lithium-ion battery cathode material improved by active oxide multiply and a preparation method thereof. The active oxide is Nb₂O₅ and is applied as a coating on the base material particles.

JP 2017 107827 A discloses a positive electrode active material for a nonaqueous electrolyte secondary battery, which maintains initial battery performance and suppresses gelatinization of a paste-like composition. The material comprises a lithium nickel composite oxide particle which includes a surface layer portion disposed on the surface thereof and a central portion other than the surface layer portion, and which has a composition represented by the formula LiₜNi_{1-x-y}CoₓM1_{y}M2_{z}O_{2+α}, wherein M1 is at least one element selected from Mg, Al, Ca, Ti, V, Cr, Mn, Zr, Nb, Mo and W, M2 is at least one element of Al and Nb, and 0.01≦t≦1.20, 0≦x≦0.22, 0≦y≦0.15, 0<z≦0.03, and 0≦α≦0.1, and M2 is included in the surface layer portion.

US 2009/081548 A1 discloses a positive electrode for a lithium ion secondary battery, which material includes active material particles containing a lithium composite oxide composed mainly of nickel and represented by a particular compositional formula, and which may contain certain selected metals distributed more in the surface layer portions of the active material particles compared with the inner portions thereof.

JP 2000 323143 A discloses a positive electrode active material for a lithium secondary battery, which has improved safety in an internal short circuit test. The material has a layered crystalline structure and is a powder of a composite oxide expressed by a particular compositional formula containing Li and Ni as main constituents.

The conductivity of the pressed powder is set to be within a specific defined range.

US 2015/010821 A1 teaches positive electrode active materials for a lithium ion battery, the material comprising a lithium metal oxide comprising at least Ni and Mn, whereby in the examples, molar ratios of Ni 0.33, 0.5 or 0.7 are used. Some of the materials are preferably doped with one or more additive elements among Zr, W, Sr and Nb. The dopant element is assumed by the authors to be present on the surface and the boundary surface of the crystal particle. W and Zr are stated to be preferable, whereby more preferable are both W and Zr. Several of the examples of the document use a dopant, however mostly a single one only. The last one of the examples uses Zr and W together as the dopant. The material of these examples has however Ni molar ratio of 0.33 with respect to the total amount of Ni, Mn and Co.

### SUMMARY OF INVENTION

### Technical Problem

However, based on Patent Document 1, when the coating of lithium niobate is provided on the surface of the lithium-containing transition metal oxide by the method known in the prior art (in Patent Document 1), the reaction resistance in the charge-discharge cycles of the lithium ion battery may be increased. Therefore, there would be a need for further improvement.

An object of the present invention is to provide a positive electrode active material for a lithium ion battery, which has good battery characteristics.

### Solution to Problem

In one aspect, the present invention relates to a positive electrode active material for a lithium ion battery, the positive electrode active material comprising:
positive electrode active material particles each having a composition represented by the following formula:

   LiₐNi_{b}Co_{c}Mn_{d}O₂
in which 1.00 ≤ a ≤ 1.02; 0.8 ≤ b ≤ 0.9; and b + c + d = 1; and
a coating layer containing lithium niobate, which partially covers surfaces of the positive electrode active material particles, wherein the coating layer partially covering surfaces of the positive electrode active material particles contains lithium niobate and both of lithium zirconate and lithium tungstate;
wherein the positive electrode active material has a ratio of Nb to the total amount of Ni, Co and Mn of from 0.4 to 1.2 mol%.

In an embodiment of the positive electrode active material for the lithium ion battery according to the present invention, the entire positive electrode active material has a composition represented by the following formula:

LiₐNi_{b}Co_{c}Mn_{d}Nb_{α}O_{2+3α}

in which 1.004 ≤ a ≤ 1.02; 0.8 ≤ b ≤ 0.9; b + c + d = 1; and 0.004 ≤ α ≤ 0.012.

In another embodiment of the positive electrode active material for the lithium ion battery according to the present invention, when observing a cross section of the positive electrode active material with a scanning electron microscope (SEM), at least a part that is not covered with the covering layer can be observed on surface parts of the positive electrode active material particles by SEM-EDX measurement.

In yet another embodiment of the positive electrode active material for the lithium ion battery according to the present invention, the positive electrode active material has a ratio of Nb, Zr and W to the total amount of Ni, Co and Mn of from 0.4 to 1.2 mol%.

In another aspect, the present invention relates to a method for producing the positive electrode active material for the lithium ion battery according to the first aspect of the present invention, the method comprising:
(i) dispersing Nb₂O₅ in pure water to prepare an additive slurry, wherein this step (i) comprises dispersing Nb₂O₅ and both of ZrO₂ and WO₃ in pure water to prepare the additive slurry;
   and then either of the following series of steps (ii) or (iii):
(ii)
   (a) adding the additive slurry to a medium containing the positive electrode active material particles in pure water and dispersing the resulting mixture with stirring to prepare a surface-treated slurry,
   (b) drying the surface-treated slurry by a micro-mist dryer to obtain surface-treated particles, and
   (c) subjecting the surface-treated particles to a heat treatment at a temperature of from 650 to 800 °C; or
(iii)
   (a) adding the additive slurry to a medium containing nickel-cobalt-manganese hydroxide in pure water and dispersing the resulting mixture with stirring to prepare a surface-treated slurry,
   (b) drying the surface-treated slurry by a micro-mist dryer to obtain a surface-treated precursor, and
   (c) adding a lithium source to the surface-treated precursor and firing the resulting mixture at a temperature of from 650 °C to 800 °C.

In an embodiment of the method for producing the positive electrode active material for the lithium ion battery according to the preceding aspect of the present invention, an average particle diameter D50 on volume basis of Nb₂O₅ as a powder is from 0.3 to 0.8 µm.

In another embodiment of the method for producing the positive electrode active material for the lithium ion battery according to the embodiment defined in the preceding paragraph, an average particle diameter D50 on volume basis of each of Nb₂O₅, ZrO₂ and WO₃ as a powder is from 0.3 to 0.8 µm.

In yet another aspect, the present invention relates to a positive electrode for a lithium ion battery, comprising the positive electrode active material for the lithium ion battery according to the first aspect of the present invention.

In yet another aspect, the present invention relates to a lithium ion battery comprising the positive electrode for the lithium ion battery according to the preceding aspect of the present invention.

### Advantageous Effects of Invention

According to the present invention, it is possible to provide a positive electrode active material for a lithium ion battery, which has good battery characteristics.

### BRIEF DESCRIPTION OF DRAWINGS

FIG. 1 shows an observation photograph for an SEM cross section in Example A1.
FIG. 2 shows a SEM cross section-EDX Ni mapping result in Example A1.
FIG. 3 shows a SEM cross section-EDX Nb mapping result in Example A1.

### DESCRIPTION OF THE PREFERRED EMBODIMENTS

### [Reference Embodiment 1]

This is a Reference Embodiment which falls outside the scope of the present invention defined in the appended claims, but is nevertheless presented for illustrative purposes only.

### (Structure of Positive Electrode Active Material for Lithium Ion Battery)

A positive electrode active material for a lithium ion battery according to this Reference Embodiment includes: positive electrode active material particles each having a composition represented by the following formula:

LiₐNi_{b}Co_{c}Mn_{d}O₂

in which 1.00 ≤ a ≤ 1.02; 0.8 ≤ b ≤ 0.9; and b + c + d = 1; and
a coating layer containing lithium niobate, which partially covers surfaces of the positive electrode active material particles. As used herein, the positive electrode active material particle refers to a component of only a core part that does not include the coating layer, and the positive electrode active material refers to the entire component including the coating layer and the positive electrode active material particles.

Conventionally, in an all-solid battery, the entire positive electrode active material is covered with lithium niobate in order to prevent reaction between the positive electrode active material and sulfur in a sulfide-based solid electrolyte. Also, in a liquid-based battery, the entire positive electrode active material is covered with lithium niobate in order to suppress reaction with an electrolytic solution. However, since lithium niobate has high resistance, the covering of the entire positive electrode active material results in increased reaction resistance during charging and discharging, so that battery characteristics may be deteriorated. On the other hand, as described above, the positive electrode active material for the lithium ion battery according to this Reference Embodiment partially provides the coating layer containing lithium niobate on the surfaces of the positive electrode active material particles represented by the compositional formula: LiₐNi_{b}Co_{c}Mn_{d}O₂. Such a structure suppresses an increase in reaction resistance in charge-discharge cycles of a lithium ion battery using the positive electrode active material, and also improves a discharge capacity and cycle characteristics.

The positive electrode active material for the lithium ion battery according to this Reference Embodiment has a higher composition ratio of Ni to the total amount of Ni, Co, and Mn of the lithium-containing transition metal oxide forming the positive electrode active material particles, which ratio is 0.8 or more and 0.9 or less. In general, such a higher ratio of Ni in the positive electrode active material tends to react with the electrolytic solution when used for the lithium ion battery. However, the positive electrode active material for the lithium ion battery according to this Reference Embodiment provides the coating layer containing lithium niobate on a part of the surfaces of the positive electrode active material particles, so that the reaction with the electrolytic solution is satisfactorily suppressed. Therefore, it is possible to prevent deterioration of battery performance such as the discharge capacity and cycle characteristics.

In the positive electrode active material for the lithium ion battery according to this Reference Embodiment, the ratio of Nb to the total amount of Ni, Co and Mn is controlled to be from 0.4 to 1.2 mol%. Such a configuration can hardly decrease a discharge capacity, suppress an increase in reaction resistance in a charge-discharge cycles, and improve cycle characteristics. The ratio of Nb to the total amount of Ni, Co and Mn may be preferably from 0.5 to 1.1 mol%, and more preferably from 0.6 to 1.0 mol%.

In the positive electrode active material for the lithium ion battery according to this Reference Embodiment, the composition of the entire positive electrode active material may be represented by the following formula:

LiₐNi_{b}Co_{c}Mn_{d}Nb_{α}O_{2+3α}

with 1.004 ≤ a ≤ 1.02; 0.8 ≤ b ≤ 0.9; b + c + d = 1; and 0.004 ≤ α ≤ 0.012.

In the positive electrode active material for the lithium ion battery according to this Reference Embodiment, when a cross section of the positive electrode active material is observed with a scanning electron microscope (SEM), SEM-EDX measurement can indicate parts that are not covered with the coating layer on the surface parts of the positive electrode active material particles.

### (Method for Producing Positive Electrode Active Material for Lithium Ion Battery)

A method for producing the positive electrode active material for the lithium ion battery according to this Reference Embodiment may include the steps of: dispersing Nb₂O₅ in pure water to prepare an additive slurry; adding the additive slurry to a medium containing the positive electrode active material particles in pure water and dispersing the resulting mixture with stirring to prepare a surface-treated slurry; drying the surface-treated slurry by a micro-mist dryer to obtain surface-treated particles; and subjecting the surface-treated particles to a heat treatment at a temperature of from 650 to 800 °C.

In another reference embodiment, a method for producing the positive electrode active material for the lithium ion battery according to this Reference Embodiment may include the steps of: dispersing Nb₂O₅ in pure water to prepare an additive slurry; adding the additive slurry to a medium containing nickel-cobalt-manganese hydroxide in pure water and dispersing the resulting mixture with stirring to prepare a surface-treated slurry; drying the surface-treated slurry by a micro-mist dryer to obtain a surface-treated precursor; and adding a lithium source to the surface-treated precursor and firing the resulting mixture at a temperature of from 650 °C to 800 °C.

According to the method for producing the positive electrode active material for the lithium ion battery according to this Reference Embodiment as described above, the additive slurry obtained by dispersing Nb₂O₅ in pure water is added to a medium obtained by introducing the positive electrode active material particles in pure water, and dispersed with stirring to prepare a surface-treated slurry. Therefore, the coating layer containing lithium niobate can be provided on the surfaces of the positive electrode active material particles by simple steps. In the step of dispersing Nb₂O₅ in pure water to prepare the additive slurry, the additive slurry is preferably prepared by dispersing Nb₂O₅ in pure water with stirring and ultrasonically dispersing it. With such a manner, the additive slurry in which Nb₂O₅ is more satisfactorily dispersed can be prepared.

Further, the surface-treated slurry is dried by a micro-mist dryer to obtain surface-treated particles or a surface-treated precursor, so that the surface-treated particles or surface-treated precursor without fine powder can be obtained during drying with the micro-mist dryer. Therefore, a classification step for removing the fine powder is eliminated, and a surface-treated positive electrode active material having improved battery characteristics, in particular improved charge-discharge cycle characteristics, can be produced at lower cost.

The positive electrode active material for the lithium ion battery according to this Reference Embodiment has a higher composition ratio of Ni to the total amount of Ni, Co, and Mn of the lithium-containing transition metal oxide forming the positive electrode active material particles, the ratio being 0.8 or more and 9 or less. In general, such a higher ratio of Ni in the positive electrode active material tends to increase residual alkali. Therefore, it is more preferable that the niobium oxide Nb₂O₅ used for preparing the additive slurry has an average particle diameter D50 on volume basis as a powder of from 0.3 to 0.8 µm. According to such a configuration, Nb₂O₅ added to the surfaces of the positive electrode active material particles is allowed to be present without waste, so that Nb₂O₅ reacts with residual alkali Li to form lithium niobate. As a result, the residual alkali on the surface of the positive electrode active material is reduced, so that it is possible to satisfactorily prevent gelation in preparation of the positive electrode slurry and deterioration of battery performance such as cycle characteristics.

### [Invention Embodiment 2]

This is an Invention Embodiment which falls within the scope of the present invention defined in the appended claims.

### (Structure of Positive Electrode Active Material for Lithium Ion Battery)

A positive electrode active material for a lithium ion battery according to this Invention Embodiment of the present invention includes:
positive electrode active material particles each having a composition represented by the following formula:

   LiₐNi_{b}Co_{c}Mn_{d}O₂
in which 1.00 ≤ a ≤ 1.02; 0.8 ≤ b ≤ 0.9. and b + c + d = 1; and
a coating layer partially covering surfaces of the positive electrode active material particles, the coating layer containing lithium niobate and both of lithium zirconate and lithium tungstate.

Conventionally, in an all-solid battery, the entire positive electrode active material is covered with lithium niobate in order to prevent reaction between the positive electrode active material and sulfur in a sulfide-based solid electrolyte. Also, in a liquid-based battery, the entire positive electrode active material is covered with lithium niobate in order to suppress reaction with an electrolytic solution. However, since lithium niobate has high resistance, the covering of the entire positive electrode active material results in increased reaction resistance during charging and discharging, so that battery characteristics may be deteriorated. On the other hand, as described above, the positive electrode active material for the lithium ion battery according to this Invention Embodiment of the present invention partially provides the coating layer containing lithium niobate and both of lithium zirconate and lithium tungstate on the surfaces of the positive electrode active material particles represented by the compositional formula: LiₐNi_{b}Co_{c}Mn_{d}O₂. Such a structure suppresses an increase in reaction resistance in charge-discharge cycles of a lithium ion battery using the positive electrode active material, and also improves a discharge capacity and cycle characteristics.

The positive electrode active material for the lithium ion battery according to this Invention Embodiment of the present invention has a higher composition ratio of Ni to the total amount of Ni, Co, and Mn of the lithium-containing transition metal oxide forming the positive electrode active material particles, which ratio is 0.8 or more and 0.9 or less. In general, such a higher ratio of Ni in the positive electrode active material tends to react with the electrolytic solution when used for the lithium ion battery. However, the positive electrode active material for the lithium ion battery according to this Invention Embodiment of the present invention provides the coating layer containing lithium niobate and both of lithium zirconate and lithium tungstate on a part of the surfaces of the positive electrode active material particles, so that the reaction with the electrolytic solution is satisfactorily suppressed. Therefore, it is possible to prevent deterioration of battery performance such as a discharge capacity and cycle characteristics.

In the positive electrode active material for the lithium ion battery according to this Invention Embodiment of the present invention, the ratio of Nb, Zr and W to the total amount of Ni, Co and Mn is controlled to be from 0.4 to 1.2 mol%. Such a configuration can hardly decrease a discharge capacity, suppress an increase in reaction resistance in charge-discharge cycles, and improve cycle characteristics. The ratio of Nb, Zr and W to the total amount of Ni, Co and Mn may be preferably from 0.5 to 1.1 mol%, and more preferably from 0.6 to 1.0 mol%.

In the positive electrode active material for the lithium ion battery according to this Invention Embodiment of the present invention, the composition of the entire positive electrode active material may be represented by the following formula:

LiₐNi_{b}Co_{c}Mn_{d}Nb_{α}Zr_{β}W_{γ}O_{2+3α+3β+4γ}

in which 1.004 ≤ a ≤ 1.02; 0.8 ≤ b ≤ 0.9; b + c + d = 1; and 0.004 ≤ α +β + γ ≤ 0.012.

In the positive electrode active material for the lithium ion battery according to this Invention Embodiment of the present invention, when a cross section of the positive electrode active material is observed with a scanning electron microscope (SEM), SEM-EDX measurement can indicate parts that are not covered with the coating layer on the surface parts of the positive electrode active material particles.

### (Method for Producing Positive Electrode Active Material for Lithium Ion Battery)

The method for producing the positive electrode active material for the lithium ion battery according to this Invention Embodiment of the present invention may include the steps of: dispersing Nb₂O₅ and both of ZrO₂ and WO₃ in pure water to prepare an additive slurry; adding the additive slurry to a medium containing the positive electrode active material particles in pure water and dispersing the resulting mixture with stirring to prepare a surface-treated slurry; drying the surface-treated slurry by a micro-mist dryer to obtain surface-treated particles; and subjecting the surface-treated particles to a heat treatment at a temperature of from 650 to 800 °C.

Further, the method for producing the positive electrode active material for the lithium ion battery according to this Invention Embodiment of the present invention may include the steps of: dispersing Nb₂O₅ and both of ZrO₂ and WO₃ in pure water to prepare an additive slurry; adding the additive slurry to a medium containing nickel-cobalt-manganese hydroxide in pure water and dispersing the resulting mixture with stirring to prepare a surface-treated slurry; drying the surface-treated slurry by a micro-mist dryer to obtain a surface-treated precursor; and adding a lithium source to the surface-treated precursor and firing the resulting mixture at a temperature of from 650 °C to 800 °C.

According to the method for producing the positive electrode active material for the lithium ion battery according to this Invention Embodiment of the present invention as described above, the additive slurry obtained by dispersing Nb₂O₅ and both of ZrO₂ and WO₃ in pure water is added to a medium obtained by introducing the positive electrode active material particles in pure water, and dispersed with stirring to prepare the surface-treated slurry. Therefore, the coating layer containing lithium niobate and both of lithium zirconate and lithium tungstate can be provided on the surfaces of the positive electrode active material particles by simple steps. Further, according to the method for producing the positive electrode active material for the lithium ion battery according to this Invention Embodiment of the present invention, the surface-treated slurry is prepared by dispersing Nb₂O₅ and both of ZrO₂ and WO₃ in pure water to prepare the additive slurry, adding the additive slurry to the medium containing the nickel-cobalt-manganese hydroxide in pure water and dispersing the resulting mixture with stirring. Therefore, the coating layer containing lithium niobate and both of lithium zirconate and lithium tungstate can be provided on the surfaces of the positive electrode active material particles by simple steps. In the step of dispersing Nb₂O₅ and both of ZrO₂ and WO₃ in pure water to prepare the additive slurry, the additive slurry is preferably prepared by dispersing Nb₂O₅ and both of ZrO₂ and WO₃ in pure water with stirring and ultrasonically dispersing them. With such a manner, the additive slurry in which Nb₂O₅ and both of ZrO₂ and WO₃ are more satisfactorily dispersed can be prepared.

Further, the surface-treated slurry is dried by the micro-mist dryer to obtain the surface-treated particles or the surface treatment precursor, so that surface-treated particles or a surface-treated precursor without fine powder can be obtained during drying with the micro-mist dryer. Therefore, a classification step for removing fine powder is eliminated, and a surface-treated positive electrode active material having improved battery characteristics, in particular improved charge/discharge cycle characteristics, can be produced at lower cost.

The positive electrode active material for the lithium ion battery according to this Invention Embodiment of the present invention has a higher composition ratio of Ni to the total amount of Ni, Co, and Mn of the lithium-containing transition metal oxide forming the positive electrode active material particles, the ratio being 0.8 or more and 9 or less. In general, such a higher ratio of Ni in the positive electrode active material tends to increase residual alkali. Therefore, it is more preferable that Nb₂O₅, ZrO₂ and WO₃ used for preparing the additive slurry have an average particle diameter D50 on volume basis as a powder of from 0.3 to 0.8 µm. According to such a configuration, Nb₂O₅, ZrO₂ and WO₃ added to the surfaces of the positive electrode active material particles are allowed to be present without waste, so that Nb₂O₅, ZrO₂ and WO₃ react with residual alkali Li to form lithium niobate and both of lithium zirconate and lithium tungstate. As a result, the residual alkali on the surface of the positive electrode active material is reduced, so that it is possible to satisfactorily prevent gelation in preparation of the positive electrode slurry and deterioration of battery performance such as cycle characteristics.

### [Positive Electrode for Lithium Ion Battery and Structure of Lithium Ion Battery Using the Positive Electrode]

The positive electrode for the lithium ion battery according to each of the above Reference Embodiment and the above Invention Embodiment of the present invention has a structure in which a positive electrode agent prepared by mixing the positive electrode active material for the lithium ion battery as stated above, a conductive auxiliary agent and a binder is provided on one side or both sides of a current collector made of an aluminum foil or the like. Further, the lithium ion battery according to an embodiment of that aspect of the present invention includes the positive electrode for the lithium ion battery having such a structure according to the above Invention Embodiment. Furthermore, the lithium ion battery according to an embodiment of the present invention may be a liquid-based lithium ion battery or an all-solid lithium ion battery.

### EXAMPLES

Hereinafter, Examples are provided for better understanding of the present invention and its advantages, but the present invention is not limited to these Examples.

Of these Examples, Examples A1 to A9 and Examples B1 and B2 are all Reference Examples which, although strictly speaking they are outside the scope of the claimed invention, are nevertheless presented as useful further examples illustrating the production and properties of materials similar to those within the actual scope of the claimed invention. Example B3 is an actual Invention Example which falls within the scope of the present invention as defined in the appended claims.

### (Reference Examples A1, A2, A4, A5)

Nb₂O₅ having an average particle diameter D50 of 0.5 µm was dispersed in pure water with stirring and ultrasonically dispersed to prepare an additive slurry. The additive slurry was added to a medium which had been separately prepared by introducing nickel-cobalt-manganese hydroxide in pure water, and the resulting mixture was dispersed with stirring to prepare a surface-treated slurry. The surface-treated slurry was then dried by a micro-mist dryer at 120 °C to remove fine powder and obtain a surface-treated precursor. To the surface-treated precursor was then added lithium hydroxide, and fired in an oxygen atmosphere at 740 °C for 12 hours. Thus, each positive electrode active material including positive electrode active material particles having each composition as shown in Table 1 and a coating layer containing lithium niobate partially covering the surfaces of the positive electrode active material particles was obtained.

### (Reference Example A3)

Nb₂O₅ having an average particle diameter D50 of 0.5 µm was dispersed in pure water with stirring and ultrasonically dispersed to prepare an additive slurry. The additive slurry was added to a medium which had been separately prepared by introducing positive electrode active material particles having the composition as shown in Table 1 in pure water, and the resulting mixture was dispersed with stirring to prepare a surface-treated slurry. The surface-treated slurry was then dried by a micro-mist dryer at 120 °C to remove fine powder and obtain surface-treated particles. The surface-treated particles were then subjected to a heat treatment in an oxygen atmosphere at 700 °C for 12 hours. Thus, a positive electrode active material including positive electrode active material particles having the composition as shown in Table 1 and a coating layer containing lithium niobate partially covering the surfaces of the positive electrode active material particles was obtained.

### (Reference Example A6)

A positive electrode active material was prepared under the same conditions as those in Example A1, with the exception that Nb₂O₅ having an average particle diameter D50 of 0.2 µm was used as a sample to be dispersed in pure water with stirring.

### (Reference Example A7)

A positive electrode active material was prepared under the same conditions as those in Example A1, with the exception that Nb₂O₅ having an average particle diameter D50 of 0.3 µm was used as a sample to be dispersed in pure water with stirring.

### (Reference Example A8)

A positive electrode active material was prepared under the same conditions as those in Example A1, with the exception that Nb₂O₅ having an average particle diameter D50 of 0.8 µm was used as a sample to be dispersed in pure water with stirring.

### (Reference Example A9)

A positive electrode active material was prepared under the same conditions as those in Example A1, with the exception that Nb₂O₅ having an average particle diameter D50 of 0.9 µm was used as a sample to be dispersed in pure water with stirring.

### (Comparative Example A1)

A lithium foil was added to absolute ethanol and pentaethoxy niobium was then added to prepare an additive slurry. To the additive slurry were then added positive electrode active material particles having the composition as shown in Table 1, and dispersed with stirring to prepare a surface-treated slurry. The surface-treated slurry was then dried by a micro-mist dryer at 120 °C to remove fine powder and obtain surface-treated particles. The surface-treated particles were then subjected to a heat treatment in an oxygen atmosphere at 400 °C for 12 hours. Thus, a positive electrode active material including positive electrode active material particles having the composition as shown in Table 1 and a coating layer containing lithium niobate covering the surfaces of the positive electrode active material particles was obtained.

### (Comparative Example A2)

Nickel-cobalt-manganese hydroxide was charged into pure water and dispersed with stirring to prepare a slurry, which was dried at 120 °C by a micro-mist drier to remove fine powder and obtain a surface-treated precursor. To the surface-treated precursor was then added lithium hydroxide, and fired in an oxygen atmosphere at 740 °C for 12 hours. Thus, a positive electrode active material having the composition as shown in Table 1 was obtained.

### (Comparative Example A3)

A positive electrode active material was prepared under the same conditions as those in Reference Example A1, with the exception that a surface-treated slurry was placed in a stainless steel tray and introduced in a thermostat chamber at 120 °C for 12 hours and dried.

### (Reference Example B1)

Nb₂O₅ and ZrO₂ each having an average particle diameter D50 of 0.5 µm were dispersed in pure water with stirring and ultrasonically dispersed to prepare an additive slurry. The additive slurry was added to a medium which had been separately prepared by introducing nickel-cobalt-manganese hydroxide in pure water, and the resulting mixture was dispersed with stirring to prepare a surface-treated slurry. The surface-treated slurry was then dried by a micro-mist dryer at 120 °C to remove fine powder and obtain a surface-treated precursor. To the surface-treated precursor was then added lithium hydroxide, and fired in an oxygen atmosphere at 740 °C for 12 hours. Thus, a positive electrode active material including positive electrode active material particles having the composition as shown in Table 2 and a coating layer containing lithium niobate and lithium zirconate partially covering the surfaces of the positive electrode active material particles was obtained.

### (Reference Example B2)

Nb₂O₅ and WO₃ each having an average particle diameter D50 of 0.5 µm were dispersed in pure water with stirring and ultrasonically dispersed to prepare an additive slurry. The additive slurry was then added to a medium which had been separately prepared by introducing nickel-cobalt-manganese hydroxide in pure water, and the resulting mixture was dispersed with stirring to prepare a surface-treated slurry. The surface-treated slurry was then dried by a micro-mist dryer at 120 °C to remove fine powder and obtain a surface-treated precursor. To the surface-treated precursor was then added lithium hydroxide, and fired in an oxygen atmosphere at 740 °C for 12 hours. Thus, a positive electrode active material including positive electrode active material particles having the composition as shown in Table 2 and a coating layer containing lithium niobate and lithium tungstate partially covering the surfaces of the positive electrode active material particles was obtained.

### (Invention Example B3)

Nb₂O₅, ZrO₂ and WO₃ each having an average particle diameter D50 of 0.5 µm were dispersed in pure water with stirring and ultrasonically dispersed to prepare an additive slurry. The additive slurry was then added to a medium which had been separately prepared by introducing nickel-cobalt-manganese hydroxide in pure water, and the resulting mixture was dispersed with stirring to prepare a surface-treated slurry. The surface-treated slurry was then dried by a micro-mist dryer at 120 °C to remove fine powder and obtain a surface-treated precursor. To the surface-treated precursor was then added lithium hydroxide, and fired in an oxygen atmosphere at 740 °C for 12 hours. Thus, a positive electrode active material including positive electrode active material particles having the composition as shown in Table 2 and a coating layer containing lithium niobate, lithium zirconate and lithium tungstate partially covering the surfaces of the positive electrode active material particles was obtained.

### (Comparative Examples B1 and B2)

Nb₂O₅ was dispersed in pure water with stirring and ultrasonically dispersed to prepare an additive slurry. The additive slurry was then added to a medium which had been separately prepared by introducing nickel-cobalt-manganese hydroxide in pure water, and the resulting mixture was dispersed with stirring to prepare a surface-treated slurry. The surface-treated slurry was then dried by a micro-mist dryer at 120 °C to remove fine powder and obtain a surface-treated precursor. To the surface-treated precursor was then added lithium hydroxide, and fired in an oxygen atmosphere at 740 °C for 12 hours. Thus, each positive electrode active material including positive electrode active material particles having each composition as shown in Table 2 and a coating layer containing lithium niobate partially covering the surfaces of the positive electrode active material particles was obtained.

### (Evaluation)

Each positive electrode active material of Reference Examples A1 to A9, Reference Examples B1 and B2 and Invention Example B3, Comparative Examples A1 to A3, and Comparative Examples B1 and B2 was evaluated as follows.

### - Coated State of Coating Layer

By measuring each positive electrode active material by SEM-EDX, a SEM observation photograph of the cross section was taken and a coated state of the coating layer was visually observed. In Reference Examples A1 to A9 and Reference Examples B1 and B2 and Invention Example B3, each coating layer was partially formed on the surfaces of the positive electrode active material particles, whereas in Comparative Example A1, the coating layer was formed on the entire surface of the positive electrode active material particles, and in Comparative Example A2, no coating layer was formed. As used herein, the phrase "coating layer was partially formed" means that it could be confirmed by the SEM-EDX that the coating layer was present on a part of the surfaces of the positive electrode active material particles, rather than on the entire surface of the positive electrode active material particles.

### - Residual Alkali Amount

The residual alkali amount was determined by dispersing 1 g of each produced positive electrode active material powder in 50 mL of pure water, stirring it for 10 minutes and filtering it, and then measuring a potential difference for a mixed solution of 10 mL of the filtrate and 15 mL of pure water by 0.1 N HCl.

### - Discharge Capacity, Charge-Discharge Cycles, and Increased Ratio of Resistance after Charge-Discharge Cycles

Each positive electrode active material, acetylene black as a conductive material, and polyvinylidene fluoride as a binder were weighed at a ratio of 90:5:5, and polyvinylidene fluoride as a binder was dissolved in an organic solvent (N-methylpyrrolidone) and mixed with each active material and the conductive material to form a slurry. The slurry was applied on an aluminum foil, dried, and press-molded to form a positive electrode. Then, as a battery structure, a 2032-type coin cell for evaluation was prepared such that a negative electrode as a counter electrode was Li, and an electrolytic solution was 1 M-LiPF₆ dissolved in EC-DMC (3:7). Using the coin cell, a discharge capacity (0.05 C), charge-discharge cycles (capacity retention), and a resistance after charge-discharge cycles (increased ratio) were measured under the following conditions:
- Discharge Capacity (0.05 C)
   A temperature of 25 °C; Charge: 4.30 V, 0.05 C, 20 h; Discharge: 3.0 V, 0.05 C;
- Charge-Discharge Cycles (Capacity Retention)
   A temperature of 55 °C; Charge: 4.30 V, 1 C, 2.5 h; Discharge: 3.0 V, 1 C;
   A ratio of a discharge capacity at the 20^{th} cycle to a discharge capacity at the 1^{st} cycle.
- Resistance after Charge-Discharge Cycles (Increased Ratio)
   A temperature of 55 °C; Charge: 4.30 V, 1 C, 2.5 h; Discharge: 3.0 V, 1 C;
   A ratio of a DC resistance value at the 20^{th} cycle to a DC resistance value at the 1^{st} cycle.

Tables 1 and 2 show the test conditions and evaluation results of Reference Examples A1 to A9, Reference Examples B1 and B2 and Invention Example B3, Comparative Examples A1 to A3, and Comparative Examples B1 and B2. In addition, the numerical values in the column of "Coating Layer, LiNbOs mol%" in Table 1 correspond to a ratio of Nb to the total amount of Ni, Co and Mn, and the numerical values in the columns of "Coating Layer, LiNbOs mol%", "Coating Layer, Li₂ZrO₃ mol%" and "Coating layer, Li₂WO₄ mol%" correspond to each ratio of Nb, Zr and W to the total amount of Ni, Co and Mn, and the composition of the whole of each positive electrode active material was as follows:
- Reference Example B1: Li_{1.02}Ni_{0.82}Co_{0.15}Mn_{0.03}Nb_{0.004}Zr_{0.004}O_{2.024};
- Reference Example B2: Li_{1.02}Ni_{0.82}Co_{0.15}Mn_{0.03}Nb_{0.004}W_{0.004}O_{2.028};
- Invention Example B3: Li_{1.02}Ni_{0.82}Co_{0.15}Mn_{0.03}Nb_{0.004}Zr_{0.002}W_{0.002}O_{2.026};

**[Table 1]**

| | Composition of Positive Electrode Active Material Particles LiₐNi_{b}Co_{c}Mn_{d}O₂ | | | | Drying Method of Surface-Treated Slurry | Coating Layer | Coated State | Residual Alkali | Discharge Capacity | Charge-Discharge Cycles | Resistance after Charge-Discharge Cycles |
|---|---|---|---|---|---|---|---|---|---|---|---|
| | Li | Ni/ (Ni+Co+Mn) | Co/ (Ni+Co+Mn) | Mn/ (Ni+Co+Mn) | | LiNbO₃ | Presence or Absence of Uncoated Part | % by mass | 0.05 C Load | Capacity Retention | Increased Ratio |
| | (a) | (b) | (c) | (d) | | mol% | | | mAh/g | % | % |
| Example A1 | 1.02 | 0.82 | 0.15 | 0.03 | MMD | 0.8 | Present | 0.70 | 215 | 95.9 | 89 |
| Example A2 | 1.02 | 0.82 | 0.15 | 0.03 | MMD | 0.4 | Present | 0.75 | 217 | 95.5 | 93 |
| Example A3 | 1.02 | 0.82 | 0.15 | 0.03 | MMD | 1.2 | Present | 0.67 | 211 | 95.8 | 88 |
| Example A4 | 1.01 | 0.82 | 0.15 | 0.03 | MMD | 0.8 | Present | 0.60 | 213 | 95.8 | 90 |
| Example A5 | 1.02 | 0.90 | 0.07 | 0.03 | MMD | 0.8 | Present | 0.80 | 223 | 95.2 | 95 |
| Example A6 | 1.02 | 0.82 | 0.15 | 0.03 | MMD | 0.8 | Present | 0.76 | 213 | 94.7 | 105 |
| Example A7 | 1.02 | 0.82 | 0.15 | 0.03 | MMD | 0.8 | Present | 0.74 | 214 | 95.2 | 97 |
| Example A8 | 1.02 | 0.82 | 0.15 | 0.03 | MMD | 0.8 | Present | 0.74 | 214 | 95.1 | 98 |
| Example A9 | 1.02 | 0.82 | 0.15 | 0.03 | MMD | 0.8 | Present | 0.77 | 213 | 94.5 | 107 |
| Comparative Example A1 | 1.02 | 0.82 | 0.15 | 0.03 | MMD | 0.8 | Absent | 0.85 | 209 | 94.4 | 185 |
| Comparative Example A2 | 1.02 | 0.82 | 0.15 | 0.03 | MMD | - | Present | 0.86 | 216 | 94.3 | 150 |
| Comparative Example A3 | 1.02 | 0.82 | 0.15 | 0.03 | Tray Drying | 0.8 | Present | 0.71 | 215 | 94.3 | 120 |

| | | | | | | | | | | | |
|---|---|---|---|---|---|---|---|---|---|---|---|
| *MMD: Drying By Micro-Mist Dryer | | | | | | | | | | | |

**[Table 2]**

| | Composition of Positive Electrode Active Material Particles LiₐNi_{b}Co_{c}Mn_{d}O₂ | | | | Drying Method of Surface-Treated Slurry | Coating Layer | | | Coated State | Residual Alkali | Discharge Capacity | Charge-Discharge Cycles | Resistance after Charge-Discharge Cycles |
|---|---|---|---|---|---|---|---|---|---|---|---|---|---|
| | Li | Ni/ (Ni+Co+Mn) | Co/ (Ni+Co+Mn) | Mn/ (Ni+Co+Mn) | | LiNbO₃ | Li₂ZrO₃ | Li₂WO₄ | Presence or Absence of Uncoated Part | % by mass | 0.05 C Load | Capacity Retention | Increased Ratio |
| | (a) | (b) | (c) | (d) | | mol% | mol% | mol% | | | mAh/g | % | % |
| Example B1 | 1.02 | 0.82 | 0.15 | 0.03 | MMD | 0.4 | 0.4 | - | Present | 0.69 | 216 | 96.1 | 81 |
| Example B2 | 1.02 | 0.82 | 0.15 | 0.03 | MMD | 0.4 | - | 0.4 | Present | 0.72 | 216 | 96.2 | 80 |
| Example B3 | 1.02 | 0.82 | 0.15 | 0.03 | MMD | 0.4 | 0.2 | 0.2 | Present | 0.67 | 215 | 96.9 | 78 |
| Comparative Example B1 | 1.02 | 0.5 | 0.2 | 0.3 | MMD | 0.8 | - | - | Present | 0.35 | 160 | 97.1 | 50 |
| Comparative Example B2 | 1.02 | 0.33 | 0.33 | 0.33 | MMD | 0.8 | - | - | Present | 0.25 | 165 | 96.4 | 30 |

| | | | | | | | | | | | | | |
|---|---|---|---|---|---|---|---|---|---|---|---|---|---|
| *MMD: Drying By Micro-Mist Dryer | | | | | | | | | | | | | |

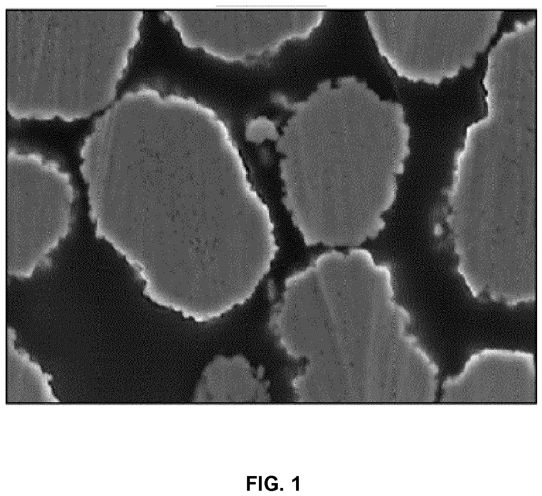

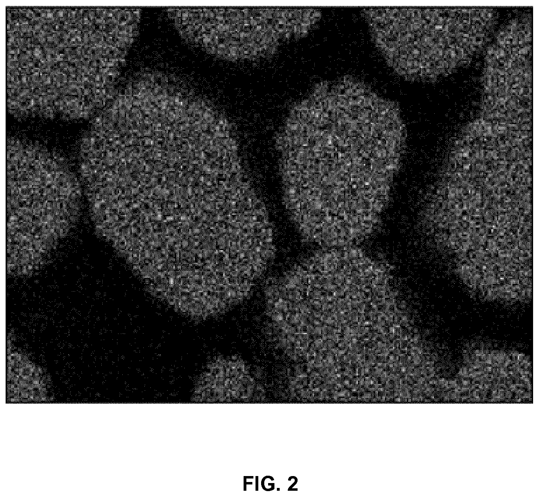

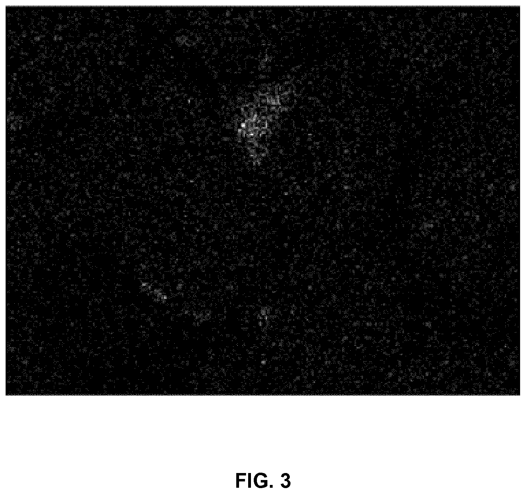

FIG. 1 shows a observation photograph of a SEM cross section in Reference Example A1, FIG. 2 shows a SEM cross section-EDX Ni mapping result in Reference Example A1, and FIG. 3 shows a SEM cross section-EDX Nb mapping result in Reference Example A1.

## Claims

1. A positive electrode active material for a lithium ion battery, the positive electrode active material comprising:
positive electrode active material particles each having a composition represented by the following formula:
LiₐNi_{b}Co_{c}Mn_{d}O₂
in which 1.00 ≤ a ≤ 1.02; 0.8 ≤ b ≤ 0.9; and b + c + d = 1; and
a coating layer containing lithium niobate, which partially covers surfaces of the positive electrode active material particles, wherein the coating layer partially covering surfaces of the positive electrode active material particles contains lithium niobate and both of lithium zirconate and lithium tungstate;
wherein the positive electrode active material has a ratio of Nb to the total amount of Ni, Co and Mn of from 0.4 to 1.2 mol%.

2. The positive electrode active material for the lithium ion battery according to claim 1, wherein the entire positive electrode active material has a composition represented by the following formula:
LiₐNi_{b}Co_{c}Mn_{d}Nb_{α}O_{2+3α}
in which1.004 ≤ a ≤ 1.02; 0.8 ≤ b ≤ 0.9; b + c + d = 1; and 0.004 ≤ α ≤ 0.012.

3. The positive electrode active material for the lithium ion battery according to claim 1 or 2, wherein when observing a cross section of the positive electrode active material with a scanning electron microscope (SEM), at least a part that is not covered with the covering layer can be observed on surface parts of the positive electrode active material particles by SEM-EDX measurement.

4. A positive electrode active material for a lithium ion battery according to any one of claims 1 to 3, wherein the positive electrode active material has a ratio of Nb, Zr and W to the total amount of Ni, Co and Mn of from 0.4 to 1.2 mol%.

5. A method for producing the positive electrode active material for the lithium ion battery according to any one of claims 1 to 3, the method comprising:
(i) dispersing Nb₂O₅ in pure water to prepare an additive slurry, wherein this step (i) comprises dispersing Nb₂O₅ and both of ZrO₂ and WO₃ in pure water to prepare the additive slurry;
and then either of the following series of steps (ii) or (iii):
(ii)
(a) adding the additive slurry to a medium containing the positive electrode active material particles in pure water and dispersing the resulting mixture with stirring to prepare a surface-treated slurry,
(b) drying the surface-treated slurry by a micro-mist dryer to obtain surface-treated particles, and
(c) subjecting the surface-treated particles to a heat treatment at a temperature of from 650 to 800 °C; or
(iii)
(a) adding the additive slurry to a medium containing nickel-cobalt-manganese hydroxide in pure water and dispersing the resulting mixture with stirring to prepare a surface-treated slurry,
(b) drying the surface-treated slurry by a micro-mist dryer to obtain a surface-treated precursor, and
(c) adding a lithium source to the surface-treated precursor and firing the resulting mixture at a temperature of from 650 °C to 800 °C.

6. The method according to claim 5, wherein an average particle diameter D50 on volume basis of Nb₂O₅ as a powder is from 0.3 to 0.8 µm.

7. The method according to claim 5 of claim 6, wherein an average particle diameter D50 on volume basis of each of Nb₂O₅, ZrO₂ and WO₃ as a powder is from 0.3 to 0.8 µm.

8. A positive electrode for a lithium ion battery, comprising the positive electrode active material for the lithium ion battery according to any one of claims 1 to 4.

9. A lithium ion battery comprising the positive electrode for the lithium ion battery according to claim 8.

## Patentansprüche

1. Positivelektrodenaktivmaterial für eine Lithium-Ionen-Batterie, wobei das Positivelektrodenaktivmaterial umfasst:
Positivelektrodenaktivmaterialpartikel, die jeweils eine Zusammensetzung haben, die durch die folgende Formel wiedergegeben wird:
LiₐNi_{b}Co_{c}Mn_{d}O₂
wobei 1,00 ≤ a ≤ 1,02; 0,8 ≤ b ≤ 0,9; und b + c + d = 1; und
eine Lithiumniobat enthaltende Beschichtungsschicht, die Oberflächen der Positivelektrodenaktivmaterialpartikel teilweise bedeckt, wobei die Beschichtungsschicht, die teilweise Oberflächen der Positivelektrodenaktivmaterialpartikel bedeckt, Lithiumniobat und sowohl Lithiumzirconat als auch Lithiumwolframat enthält,
wobei das Positivelektrodenaktivmaterial ein Verhältnis von Nb zu der Gesamtmenge von Ni, Co und Mn von 0,4 bis 1,2 Mol.% aufweist.

2. Positivelektrodenaktivmaterial für die Lithium-Ionen-Batterie nach Anspruch 1, wobei das gesamte Positivelektrodenaktivmaterial eine Zusammensetzung hat, die durch die folgende Formel wiedergegeben wird:
LiₐNi_{b}Co_{c}Mn_{d}Nb_{α}O₂+_{3α}
wobei 1,004 ≤ a ≤ 1,02; 0,8 ≤ b ≤ 0,9; b + c + d = 1; und 0,004 ≤ α ≤ 0,012.

3. Positivelektrodenaktivmaterial für die Lithium-Ionen-Batterie nach Anspruch 1 oder 2, wobei, wenn ein Querschnitt des Positivelektrodenaktivmaterials mit einem Rasterelektronenmikroskop (SEM) beobachtet wird, mindestens ein Teil, der nicht mit der Abdeckschicht bedeckt ist, mittels SEM-EDX-Messung auf Oberflächenteilen der Positivelektrodenaktivmaterialpartikel beobachtet werden kann.

4. Positivelektrodenaktivmaterial für eine Lithium-Ionen-Batterie nach einem der Ansprüche 1 bis 3, wobei das Positivelektrodenaktivmaterial ein Verhältnis von Nb, Zr und W zu der Gesamtmenge an Ni, Co und Mn von 0,4 bis 1,2 Mol.% hat.

5. Verfahren zum Herstellen des Positivelektrodenaktivmaterials für die Lithium-Ionen-Batterie nach einem der Ansprüche 1 bis 3, wobei das Verfahren umfasst:
(i) Dispergieren von Nb₂O₅ in Reinwasser, um eine Additivaufschlämmung zuzubereiten, wobei dieser Schritt (i) Dispergieren von Nb₂O₅ und sowohl ZrO₂ als auch WO₃ in Reinwasser umfasst, um die Additivaufschlämmung zuzubereiten,
und dann eine der folgenden Abfolgen der Schritte (ii) oder (iii):
(ii)
(a) Zufügen der Additivaufschlämmung zu einem Medium, welches die Positivelektrodenaktivmaterialpartikel in Reinwasser enthält, und Dispergieren der resultierenden Mischung unter Rühren, um eine oberflächenbehandelte Aufschlämmung zuzubereiten,
(b) Trocknen der oberflächenbehandelten Aufschlämmung durch einen Mikronebeltrockner, um oberflächenbehandelte Partikel zu erhalten, und
(c) Unterziehen der oberflächenbehandelten Partikel einer Wärmebehandlung bei einer Temperatur von 650 bis 800 °C; oder
(iii)
(a) Zufügen der Additivaufschlämmung zu einem Medium, welches Nickel-Kobalt-Manganhydroxid in Reinwasser enthält, und Dispergieren der resultierenden Mischung unter Rühren, um eine oberflächenbehandelte Aufschlämmung zuzubereiten,
(b) Trocknen der oberflächenbehandelten Aufschlämmung durch einen Mikronebeltrockner, um einen oberflächenbehandelten Vorläufer zu erhalten, und
(c) Zufügen einer Lithiumquelle zu dem oberflächenbehandelten Vorläufer, und Brennen der resultierenden Mischung bei einer Temperatur von 650 °C bis 800 °C.

6. Verfahren nach Anspruch 5, wobei ein volumenbasierter durchschnittlicher Partikeldurchmesser D50 von Nb₂O₅ als Pulver 0,3 bis 0,8 µm beträgt.

7. Verfahren nach Anspruch 5 oder Anspruch 6, wobei ein volumenbasierter durchschnittlicher Partikeldurchmesser D50 von jedem von Nb₂O₅, ZrO₂ und WO₃ als Pulver 0,3 bis 0,8 µm beträgt.

8. Positivelektrode für eine Lithium-Ionen-Batterie, umfassend das Positivelektrodenaktivmaterial für die Lithium-Ionen-Batterie gemäß einem der Ansprüche 1 bis 4.

9. Lithium-Ionen-Batterie, umfassend die Positivelektrode für die Lithium-Ionen-Batterie nach Anspruch 8.

## Revendications

1. Matériau actif d'électrode positive pour une batterie au lithium-ion, le matériau actif d'électrode positive comprenant :
des particules de matériau actif d'électrode positive, chacune ayant une composition représentée par la formule suivante :
LiₐNi_{b}Co_{c}Mn_{d}O₂
dans laquelle 1,00 ≤ a ≤ 1,02 ; 0,8 ≤ b ≤ 0,9 ; et b + c + d = 1 ; et
une couche de revêtement contenant du niobate de lithium, qui couvre partiellement les surfaces des particules de matériau actif d'électrode positive, dans lequel la couche de revêtement qui recouvre partiellement les surfaces des particules de matériau actif d'électrode positive contient du niobate de lithium et à la fois du zirconate de lithium et du tungstate de lithium ;
dans lequel le matériau actif d'électrode positive a un rapport de Nb à la quantité totale de Ni, de Co et de Mn de 0,4 à 1,2 mol %.

2. Matériau actif d'électrode positive pour la batterie au lithium-ion selon la revendication 1, dans lequel tout le matériau actif d'électrode positive a une composition représentée par la formule suivante :
LiₐNi_{b}Co_{c}Mn_{d}NbₐO₂+_{3α}
dans laquelle 1,004 ≤ a ≤ 1,02 ; 0,8 ≤ b ≤ 0,9 ; b + c + d = 1 ; et 0,004 ≤ α ≤ 0,012.

3. Matériau actif d'électrode positive pour la batterie au lithium-ion selon la revendication 1 ou 2, dans lequel, lors de l'observation d'une section transversale du matériau actif d'électrode positive avec un microscope électronique à balayage (MEB), au moins une partie qui n'est pas recouverte de la couche de revêtement peut être observée sur des parties de la surface des particules de matériau actif d'électrode positive par mesure par SEM-EDX.

4. Matériau actif d'électrode positive pour une batterie au lithium-ion selon l'une quelconque des revendications 1 à 3, dans lequel le matériau actif d'électrode positive a un rapport de Nb, Zr et W à la quantité totale de Ni, de Co et de Mn de 0,4 à 1,2 mol %.

5. Procédé de fabrication du matériau actif d'électrode positive pour la batterie au lithium-ion selon l'une quelconque des revendications 1 à 3, le procédé comprenant :
(i) la dispersion du Nb₂O₅ dans de l'eau pure pour préparer une suspension d'additifs, dans laquelle cette étape (i) comprend la dispersion du Nb₂O₅ et du ZrO₂ et du WO₃ dans de l'eau pure pour préparer la suspension d'additifs ;
et puis l'une ou l'autre des séries suivantes d'étapes (ii) ou (iii) :
(ii)
a) l'ajout de la suspension d'additifs dans un milieu contenant les particules de matériau actif d'électrode positive dans de l'eau pure et la dispersion du mélange résultant en remuant pour préparer une suspension traitée en surface,
b) le séchage de la suspension traitée en surface par un séchoir à microbrouillard pour obtenir des particules traitées en surface, et
c) la soumission des particules traitées en surface à un traitement thermique à une température de 650 à 800 °C ; ou
(iii)
a) l'ajout de la suspension d'additifs à un milieu contenant de l'hydroxyde de nickel-cobalt-manganèse dans de l'eau pure et la dispersion du mélange obtenu en remuant pour préparer une suspension traitée en surface,
b) le séchage de la suspension traitée en surface par un séchoir à microbrouillard pour obtenir un précurseur traité en surface, et
c) l'ajout d'une source de lithium au précurseur traité en surface et la cuisson du mélange obtenu à une température de 650 °C à 800 °C.

6. Procédé selon la revendication 5, dans lequel un diamètre moyen de particules D50 sur la base du volume de NbzOs en poudre est de 0,3 à 0,8 µm.

7. Procédé selon la revendication 5 ou la revendication 6, dans lequel un diamètre moyen de particules D50 sur la base du volume de chacun de NbzOs, de ZrO₂ et WO₃ en poudre est de 0,3 à 0,8 µm.

8. Électrode positive pour une batterie au lithium-ion comprenant le matériau actif d'électrode positive pour la batterie au lithium-ion selon l'une quelconque des revendications 1 à 4.

9. Batterie au lithium-ion comprenant l'électrode positive pour la batterie au lithium-ion selon la revendication 8.
